# EUROPEAN PATENT APPLICATION

(11) **EP 4 814 641 A1**
(43) Date of publication of application: **30.09.2026**
(21) Application number: 24892912.7
(22) Date of filing: 14.08.2024
(51) Int. Cl.: G05D 1/246

(54) **CONTROL METHOD AND CONTROL UNIT FOR SELF-MOVING DEVICE, AND SELF-MOVING DEVICE**

(30) Priority: 23.11.2023 CN 202311567907
(71) Applicant: Ecovacs Home Service Robotics Co., Ltd., Suzhou, Jiangsu 215124 (CN)
(72) Inventor: GUO, Fuan, Suzhou, Jiangsu 215124 (CN)
(74) Representative: WSL Patentanwälte Partnerschaft mbB
(86) International application number: PCT/CN2024/112161
(87) International publication number: WO 2025/107750

(57) **Abstract**

A control method and control unit for a self-moving device, and a self-moving device. The control method for a self-moving device comprises: acquiring device position information collected by a positioning apparatus and a region boundary of at least two working regions (step 102) determining a position attribute of the region boundary, the position attribute being used for indicating access and working restriction conditions at the region boundary (step 104); and, determining an operational route of the self-moving device at the region boundary on the basis of the position attribute, and controlling the self-moving device to work along the operational route, the operational route being adapted to the restriction conditions (step 106). In this way, on the basis of the access and working restriction conditions at the region boundary, the present application dynamically adjusts the operational route to adapt to the restriction conditions, so as to prevent omitted regions at the region boundary, thereby improving the working region coverage rate of the self-moving device, and ensuring safety of the self-moving device during advancing.

## Description

### CROSS-REFERENCE TO RELATED APPLICATIONS

The present application refers to Chinese Patent Application No. 202311567907.1, filed on November 23, 2023, and entitled "control method and control unit for self-moving device, and self-moving device", which is hereby incorporated by reference in its entirety.

### TECHNICAL FIELD

Embodiments of the present specification relate to the field of artificial intelligence technology, and in particular to a control method and a control unit for a self-moving device, and a self-moving device.

### BACKGROUND

The rapid advances in computer technology, the Internet, and artificial intelligence technology have led to the widespread adoption of self-moving devices across various aspects of daily life and commercial operations, such as service robots, mowing robots, and other types of robots. To realize the autonomous walking function of self-moving devices in actual use scenarios (i.e., actual physical spaces), it is necessary to perform positioning based on the positioning devices installed on the self-moving devices and control the movement of the self-moving devices.

In the prior art, the environment of operational region for self-moving devices is relatively complex. Users will divide an operational region into multiple sub-regions manually or automatically through algorithms. Due to positioning deviations of the positioning apparatus of the self-moving device in local regions and control deviations in navigation control, omitted regions at the boundaries of adjacent regions may be formed therebetween, resulting in poor coverage rate over the operational region of the self-moving device. Therefore, a more accurate method is required for the control operation or processing of self-moving devices.

### SUMMARY

In view of this, embodiments of the present specification provide a control method for a self-moving device. One or more embodiments of the present specification also relate to a control unit for a self-moving device, a self-moving device, a computer-readable storage medium and a computer program, so as to address the technical deficiencies existing in the prior art.

According to the first aspect of embodiments of the present specification, a control method for a self-moving device is provided, the self-moving device is provided with a positioning apparatus, and the method includes:
acquiring device position information collected by the positioning apparatus, and a regional interface between at least two operational regions;
determining a position attribute of the regional interface, wherein the position attribute is configured to indicate restriction conditions for passage and operation at the regional interface;
determining an operational route of the self-moving device at the regional interface according to the position attribute, and controlling the self-moving device to operate along the operational route, wherein the operational route is adapted to the restriction conditions.

According to the second aspect of embodiments of the present specification, a control unit for a self-moving device is provided, the self-moving device is provided with a positioning apparatus, the control unit includes:
an acquisition module, configured to acquire device position information collected by the positioning apparatus, and a regional interface between at least two operational regions;
a first determination module, configured to determine a position attribute of the regional interface, wherein the position attribute is configured to indicate restriction conditions for passage and operation at the regional interface;
a second determination module, configured to determine an operational route of the self-moving device at the regional interface according to the position attribute, and control the self-moving device to operate along the operational route, wherein the operational route is adapted to the restriction conditions.

According to the third aspect of embodiments of the present specification, a self-moving device is provided, and the self-moving device includes:
a body;
a driving module disposed on the body and configured to drive the body to travel;
an execution module disposed on the body and configured to execute an operation task;
a positioning apparatus disposed on the body;
a memory configured to store a computer program;
a processor coupled to the memory, wherein the program includes instructions, and when executed by the processor, the instructions cause the processor to perform operations, which include the above-mentioned operations of the control method for a self-moving device.

According to the fourth aspect of embodiments of the present specification, a computer-readable storage medium is provided, wherein the computer-readable storage medium stores computer-executable instructions that implement the above-mentioned steps of the control method for a self-moving device, when executed by a processor.

According to the fifth aspect of embodiments of the present specification, a computer program is provided, wherein when the computer program is executed in a computer, the computer is caused to execute above-mentioned steps of the control method for a self-moving device.

One embodiment of the present specification provides a control method for a self-moving device, and the self-moving device is provided with a positioning apparatus, the method includes: acquiring device position information collected by the positioning apparatus, and a regional interface between at least two operational regions; determining a position attribute of the regional interface, wherein the position attribute is configured to indicate restriction conditions for passage and operation at the regional interface; determining an operational route of the self-moving device at the regional interface according to the position attribute, and controlling the self-moving device to operate along the operational route, wherein the operational route is adapted to the restriction conditions.

One embodiment of the present specification achieves the determination of a position attribute of a regional interface, wherein the position attribute can indicate restriction conditions for passage and operation at the regional interface. An operational route of the self-moving device at the regional interface can be determined according to the position attribute, and the self-moving device is controlled to operate along the determined operational route, wherein the operational route is adapted to the restriction conditions. In this way, the corresponding operational route can be dynamically adjusted to adapt to the restriction conditions for passage and operation at the regional interface between adjacent regions, so as to avoid an omitted area at the regional interface between adjacent regions, thereby improving the coverage rate of the operational region of the self-moving device and ensuring safety of the self-moving device during travel. In addition, dynamically adjusting the corresponding operational route at the regional interface between adjacent regions can make the self-moving device more intelligent and have better interactivity.

### BRIEF DESCRIPTION OF THE DRAWINGS

FIG. 1 is a flowchart of a control method for a self-moving device provided by an embodiment of the present specification;
FIG. 2a is a schematic diagram of a construction process for a self-moving device provided by an embodiment of the present specification;
FIG. 2b is a schematic diagram of a recognition process for a first object type provided by an embodiment of the present specification;
FIG. 2c is a schematic diagram of a recognition process for a second object type provided by an embodiment of the present specification;
FIG. 2d is a schematic diagram of a recognition process for a third object type provided by an embodiment of the present specification;
FIG. 2e is a flowchart of a dynamic control method for a zigzag route (its shape analogous to the Chinese character " 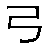 ") provided by an embodiment of the present specification;
FIG. 2f is a flowchart of a dynamic control method for an edge-following route provided by an embodiment of the present specification;
FIG. 2g is a schematic diagram of the travel of a zigzag route (its shape analogous to the Chinese character " 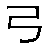 ") provided by an embodiment of the present specification;
FIG. 2h is a schematic diagram of the travel of an edge-following route provided by an embodiment of the present specification;
FIG. 3 is a flowchart of the processing steps for a control method of a self-moving device provided by an embodiment of the present specification;
FIG. 4 is a structural schematic diagram of a control unit for a self-moving device provided by an embodiment of the present specification; and
FIG. 5 is a structural block diagram of a self-moving device provided by an embodiment of the present specification.

### DETAILED DESCRIPTION OF THE EMBODIMENTS

The following description provides numerous specific details to facilitate a full understanding of the present specification. However, the present specification may be implemented in many ways other than those described herein, and a person skilled in the art may make similar extensions without departing from the connotation of the present specification. Therefore, the present specification is not limited to the specific embodiments disclosed below.

In one or more embodiments of the present specification, the terms used are merely for the purpose of describing specific embodiments, and are not intended to limit the one or more embodiments of the present specification. The terms "one" and "the" in the singular form used in one or more embodiments of the present specification and in the appended claims are also intended to include the plural form, unless the context clearly indicates otherwise. It should also be understood that the term "and/or" in one or more embodiments of present specification refers to and includes any or all possible combinations of one or more associated listed items.

It should be understood that, although terms such as "first" and "second" may be used in one or more embodiments of the present specification to describe various pieces of information, such information should not be limited to these terms. These terms are used merely to distinguish pieces of information of the same type from one another. For example, without departing from the scope of one or more embodiments of the present specification, the term "first" may also be referred to as "second," and similarly, the term "second" may also be referred to as "first." Depending on the context, the word "if" as used herein may be interpreted to mean "when," "upon," or "in response to determination"

In embodiments of the present specification, a control method for a self-moving device. The present specification simultaneously relates to a control unit for a self-moving device, a self-moving device and a computer-readable storage medium, which are described in detail in the following embodiments.

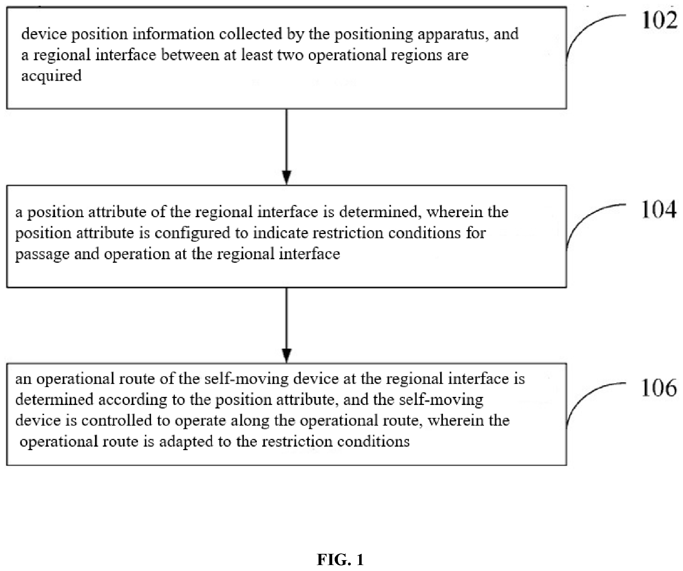

Referring to FIG. 1, FIG. 1 shows a flowchart of a control method for a self-moving device provided by an embodiment of the present specification, a positioning apparatus is disposed on the self-moving device, and the method specifically includes the following steps 102-106.

Step 102: device position information collected by the positioning apparatus, and a regional interface between at least two operational regions are acquired.

Specifically, the positioning apparatus refers to an assembly module disposed on a self-moving device that can determine the current position of the self-moving device; for example, the positioning module may be a positioning sensor, such as a GPS or an ultrasonic positioning sensor, etc. Alternatively, the positioning module may include an ordinary camera or a fisheye camera, an IMU module, a panoramic camera, a UWB tag, an encoder, and the like. In this solution, UWB base stations need to be arranged around an area where the self-moving device performs operation tasks. The UWB base stations can be manually arranged around the area by users or technical personnel of a manufacturer, and can be reasonably arranged by means of a UWB base station layout recommendation algorithm. Certainly, in practical applications, the positioning apparatus may also refer to other assembly modules capable of determining the current position of the self-moving device, which is not limited in the embodiments of the present specification.

In addition, the self-moving device may refer to a service robot, a mowing robot, etc.

It should be noted that a control unit on the self-moving device can acquire device position information collected by the positioning apparatus to monitor a travel state of the self-moving device and determine which position the self-moving device currently travels to, thereby facilitating subsequent control over a travel route.

Furthermore, a regional interface between at least two operational regions can also be acquired, and the regional interface refers to positions on an operational map where regional boundaries exist, so as to determine a position attribute of the regional interface in combination with the device position information of the self-moving device and the regional interface, and control an operational route of the self-moving device.

In an optional implementation manner of the present embodiment, before monitoring the travel state of the self-moving device, mapping may be performed on an operational region of the self-moving device first, that is, before acquiring device position information collected by the positioning apparatus, the method further includes:
constructing an operational map;
dividing the operational map into at least two operational regions, and marking regional boundaries between adjacent regions.

During actual implementation, the self-moving device needs to map the operational region when used for the first time. Specifically, the self-moving device can be manually controlled to sequentially traverse all positions where an operation task needs to be performed, or the self-moving device automatically traverses all positions where an operation task needs to be performed to construct an operational map.

It should be noted that since an operational environment of the self-moving device is generally complex, the operational map can be divided into at least two operational regions manually by a user, or the operational map can be directly divided into at least two operational regions automatically by means of algorithms. Moreover, in order to improve the operational coverage rate over two adjacent operational regions, the boundary between the adjacent regions can also be marked, so that it can be subsequently monitored whether the self-moving device moves to a position near the regional interface, and an operational route of the self-moving device at the regional interface is dynamically adjusted based on restriction conditions for passage and operation at the regional interface, so that the operational route of the self-moving device at the regional interface is adapted to an actual situation of the regional interface, thereby improving the operational coverage rate.

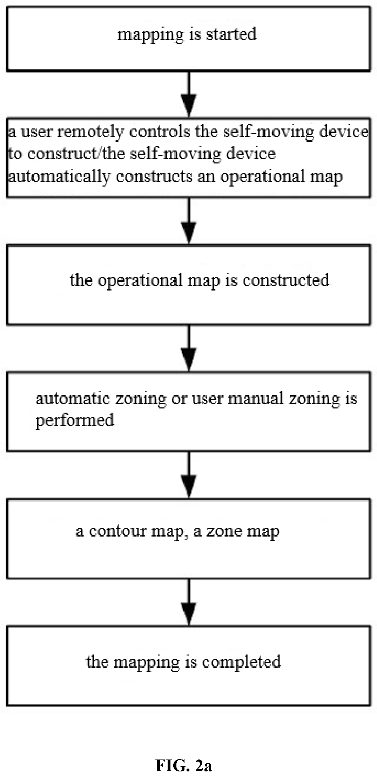

For example, FIG. 2a is a schematic diagram of a mapping process of a self-moving device provided by an embodiment of the present specification. As shown in FIG. 2a, mapping is started, then a user remotely controls the self-moving device to construct/the self-moving device automatically constructs an operational map; after the operational map is constructed, automatic zoning or user manual zoning is performed to obtain a contour map (an outer boundary map of the operational map) and a zone map, and the mapping is completed.

In an optional implementation manner of the present embodiment, in addition to marking the boundary between adjacent regions, a position attribute at the boundary can be further marked, that is, after marking the regional interface between adjacent regions, the method further includes:
marking a position attribute at the regional interface between the adjacent regions.

It should be noted that the position attribute is configured to indicate restriction conditions for passage and operation at the boundary between adjacent regions. For example, the position attribute may include non-passable and non-operable, passable and non-operable, operable, etc., so as to adjust an operational route of the self-moving device at the regional interface based on the restriction conditions, so that the operational route is adapted to the restriction conditions for passage and operation at the regional interface.

During specific implementation, a marking operation of a user at the regional interface between adjacent regions can be received, the marking operation carries a position attribute of the regional interface, and the position attribute is stored in correspondence with the regional interface.

During actual implementation, the regional interface between adjacent regions is usually a boundary line which has a certain length, and different position points of the boundary may have different position attributes. Therefore, when marking the position attribute of the boundary between adjacent regions, if the whole boundary has the same attribute, the whole boundary can be marked as the position attribute; if the whole boundary has different attributes, the position attribute of each position point of the boundary can be marked respectively.

In an embodiment of the present specification, after marking the regional interface between adjacent regions, a position attribute at the regional interface can be further marked. Subsequently, the position attribute at the regional interface can be directly acquired, and then the corresponding operational route is adapted without further additionally analyzing the restriction conditions for passage and operation at the regional interface, thereby improving control efficiency of the self-moving device.

Step 104: a position attribute of the regional interface is determined, wherein the position attribute is configured to indicate restriction conditions for passage and operation at the regional interface.

It should be noted that since the environment at the regional interface between adjacent regions is usually complex and has different restrictions, the environment at the regional interface can be analyzed during travel of the self-moving device to adapt the corresponding operational route accordingly. Specifically, the control unit can acquire device position information of the self-moving device during travel of the self-moving device, acquire a regional interface between at least two operational regions, then determine a position attribute of the acquired regional interface, and indicate restriction conditions for passage and operation at the regional interface by the position attribute, so as to control the operational route near the regional interface.

In an optional implementation manner of the present embodiment, a position attribute of the regional interface can be determined when the self-moving device travels to a position near a regional interface, that is, determining a position attribute of the regional interface includes:
determining whether a regional interface exists around the self-moving device according to the device position information and the regional interface between at least two operational regions, and if so, determining position attributes of the regional boundaries around the self-moving device.

It should be noted that the control unit can acquire device position information of the self-moving device during travel of the self-moving device, acquire a regional interface between at least two operational regions, monitor a travel state of the self-moving device, and determine whether a regional interface exists around the self-moving device. If so, it indicates that the self-moving device travels to a position near a certain regional interface, and at this time, the position attribute of the regional interface around the self-moving device can be determined.

During actual implementation, after the operational map is divided into at least two operational regions, regional boundaries between each of the adjacent regions can be marked. After device position information collected by the positioning apparatus is received, a distance between a device position indicated by the device position information and each regional interface can be calculated. If a distance from a certain regional interface is less than a distance threshold, it indicates that the self-moving device is currently relatively close to the regional interface, that is, a regional interface exists around the self-moving device, and an identifier of the regional interface is acquired. Alternatively, after the operational map is divided into at least two operational regions, the regional interface between adjacent regions may not be marked, but a zone map is saved. After the device position information collected by the positioning apparatus is acquired, the position information can be matched with the zone map to determine whether a distance between the self-moving device and a certain regional interface is less than a distance threshold, thereby determining whether a regional interface exists around the self-moving device.

During specific implementation, when it is monitored that a regional interface exists around the self-moving device, it indicates that the self-moving device travels to a position near the regional interface. In order to adapt to the complex environment of the regional interface, a position attribute of the regional interface around the self-moving device can be determined, and restriction conditions for passage and operation at the regional interface are indicated by the position attribute, thereby adapting the corresponding operational route accordingly.

In a possible implementation manner, if a position attribute of a regional interface is marked in advance, after it is determined that a regional interface exists around the self-moving device, an identifier of the regional interface around the self-moving device can be acquired, and the corresponding position attribute can be directly read according to the identifier of the regional interface.

In another possible implementation manner, if a position attribute of a regional interface is not marked in advance, the position attribute of the regional interface can be analyzed and identified.

In an optional implementation manner of the present embodiment, a position attribute of a regional interface can be analyzed and identified based on an object type at the regional interface, that is, determining a position attribute of the regional interface includes:
determining an object type at the regional interface, and determining the position attribute of the regional interface according to the object type;
wherein the object type includes a restricted passage type, a non-restricted passage type and an operation object type; the position attribute includes a non-passable and non-operable attribute, a passable but non-operable attribute and an operable attribute.

During actual implementation, an object type at a regional interface can be analyzed and determined, and then restriction conditions such as whether the regional interface is passable and whether operation is allowed at the regional interface are determined according to the object type at the regional interface, so as to determine the position attribute of the regional interface. This facilitates adapting the corresponding operational route accordingly based on the restriction conditions for passage and operation, improves the coverage rate of the operational region of the self-moving device, and makes the self-moving device more intelligent.

It should be noted that the object type at the regional interface can be classified into a restricted passage type, a non-restricted passage type and an operation object type. The restricted passage type refers to a non-passable area, such as an obstacle and a non-passable restricted area, where the non-passable restricted area can be a pool, a pit, a cliff or other area that the self-moving device cannot travel into; the non-restricted passage type refers to an area that is passable but where the self-moving device cannot perform an operation task, such as a stone road, a cobblestone road or other area where the self-moving device cannot perform an operation task; the operation object type refers to an operation object of the self-moving device. For example, if the self-moving device is a mowing robot, the operation object type is grass. During specific implementation, objects to which each type belongs can be configured in advance, that is, each object is classified into different types such as a restricted passage type, a non-restricted passage type and an operation object type.

In addition, different object types can correspond to different position attributes, which includes a non-passable and non-operable attribute, a passable but non-operable attribute and an operable attribute.

During actual implementation, position attributes corresponding to various object types can be configured in advance. After the object type at the regional interface is determined, the corresponding relationships between the position attributes and the various object types can be queried to determine the position attribute of the regional interface. For example, it is pre-configured that the restricted passage type corresponds to the non-passable and non-operable attribute, the non-restricted passage type corresponds to the passable but non-operable attribute, and the operation object type corresponds to the operable attribute. In this way, the restriction conditions for passage and operation at the regional interface can be indicated by the position attribute, thereby facilitating subsequent adaptation of the corresponding operational routes based on the restriction conditions for passage and operation, improving the coverage rate of operational regions of a self-moving device, and making the self-moving device more intelligent.

It should be noted that an image acquisition apparatus can also be provided on the self-moving device, image information at a regional interface is collected by the image acquisition apparatus, and the image information is analyzed and identified to determine the object type at the regional interface.

In an optional implementation manner of the present embodiment, the self-moving device is further provided with an image acquisition apparatus; determining an object type at the regional interface includes:
acquiring image information at the regional interface collected by the image acquisition apparatus;
recognizing the image information at the regional interface to determine the object type at the regional interface.

In an optional implementation manner of the present embodiment, the image acquisition apparatus includes a camera and/or a three-dimensional sensor; recognizing the image information at the regional interface to determine the object type at the regional interface includes:
determining the object type at the regional interface by using a deep learning model according to the image information collected by the camera and/or the three-dimensional sensor.

Specifically, the image acquisition apparatus refers to an assembly module, which is disposed on the self-moving device and capable of collecting image information of a current position of the self-moving device. For example, the image acquisition apparatus may be a camera and/or a three-dimensional sensor, where the three-dimensional sensor may refer to a sensor capable of collecting three-dimensional point cloud information within a set distance ahead, and the three-dimensional sensor is a TOF (Time of Flight) camera. The TOF camera continuously transmits light pulses to a target and then receives light returned from the target, so that it obtains three-dimensional point cloud information of the target by detecting flight (round-trip) time of the light pulses, and can collect depth point cloud information with relatively high precision, thereby ensuring accuracy of the acquired three-dimensional point cloud information of a channel. Certainly, in practical applications, the three-dimensional sensor may also be other sensors capable of collecting three-dimensional point cloud information of a channel, such as a laser radar, which is not limited in the embodiments of the present specification.

During actual implementation, image information at the regional interface collected by the image acquisition apparatus can be acquired, and then the image information is recognized and analyzed to determine the object type at the regional interface, thereby facilitating determination of restriction conditions, such as whether the regional interface is passable and whether operation is allowed at the regional interface, according to the object type at the regional interface. The position attribute of the regional interface is determined, which facilitates adapting the corresponding operational routes based on the restriction conditions for passage and operation, improves the coverage rate of operational regions of the self-moving device, and makes the self-moving device more intelligent.

In an optional implementation manner of the present embodiment, determining the object type at the regional interface by using a deep learning model according to the image information collected by the camera and/or the three-dimensional sensor includes:
if the image acquisition apparatus is a camera, inputting a two-dimensional position image collected by the camera into an image recognition model to obtain a target object at the regional interface;
if the image acquisition apparatus is a three-dimensional sensor, inputting three-dimensional point cloud information collected by the three-dimensional sensor into a point cloud learning model to obtain a target object at the regional interface;
if the image acquisition apparatus is a camera and a three-dimensional sensor, mapping the three-dimensional point cloud information collected by the three-dimensional sensor to the two-dimensional position image collected by the camera to obtain combined point cloud information, and inputting the combined point cloud information into the point cloud learning model to obtain a target object at the regional interface;
querying a target type of the target object, and taking the target type as the object type at the regional interface.

Specifically, the image recognition model is an image deep learning model for recognizing an object included in an image, and is pre-trained based on a large number of training samples. The training sample may be an image carrying a corresponding object label, so that the trained image recognition model can accurately recognize an object in an input image. In addition, the point cloud learning model is a point cloud deep learning model for recognizing an object corresponding to three-dimensional point cloud information, and is pre-trained based on a large number of training samples. The training sample may be three-dimensional point cloud information carrying a corresponding object label, so that the trained point cloud learning model can accurately recognize an object corresponding to input three-dimensional point cloud information.

During actual implementation, if the self-moving device is provided with a camera, a two-dimensional position image at the regional interface can be captured by the camera, the two-dimensional position image is input into the pre-trained image recognition model, and a target object at the regional interface is recognized by means of an image deep learning method; if the self-moving device is provided with a three-dimensional sensor, three-dimensional point cloud information at the regional interface can be collected by the three-dimensional sensor, the three-dimensional point cloud information is input into the pre-trained point cloud learning model, and a target object at the regional interface is recognized by means of a point cloud deep learning method; if the self-moving device is provided with a camera and a three-dimensional sensor, a two-dimensional position image at the regional interface can be captured by the camera, three-dimensional point cloud information at the regional interface is collected by the three-dimensional sensor, the three-dimensional point cloud information collected by the three-dimensional sensor is mapped to the two-dimensional position image collected by the camera to obtain combined point cloud information, the combined point cloud information is input into the pre-trained point cloud learning model, and a target object at the regional interface is recognized by means of a point cloud deep learning method.

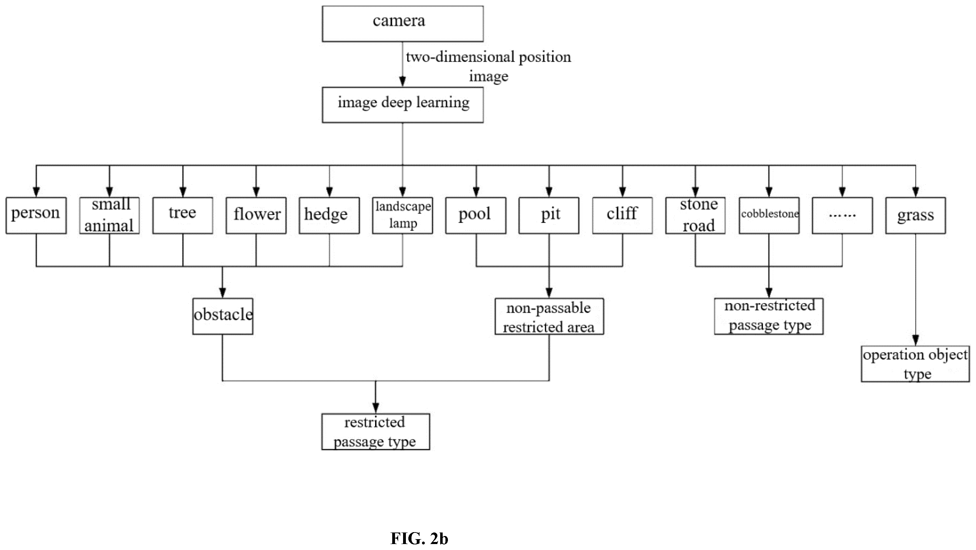

For example, FIG. 2b is a schematic diagram of a recognition process of a first object type provided by an embodiment of the present specification. As shown in FIG. 2b, a two-dimensional position image at a boundary position is captured by a camera, the two-dimensional position image is input into a pre-trained image recognition model, and an object at the boundary position is recognized by means of an image deep learning method. The object may include a person, a small animal, a tree, a flower, a hedge, a landscape lamp, a pool, a pit, a cliff, a stone road, a cobblestone, ..., grass, etc., wherein the person, the small animal, the tree, the flower, the hedge, the landscape lamp, the pool, the pit, the cliff, the stone road, the cobblestone, ... all belong to a restricted passage type; the person, the small animal, the tree, the flower, the hedge, the landscape lamp, etc. belong to obstacles, the pool, the pit, the cliff belong to a non-passable restricted area, the stone road, the cobblestone, ... belong to an non-restricted passage type, and the grass belongs to an operation object type.

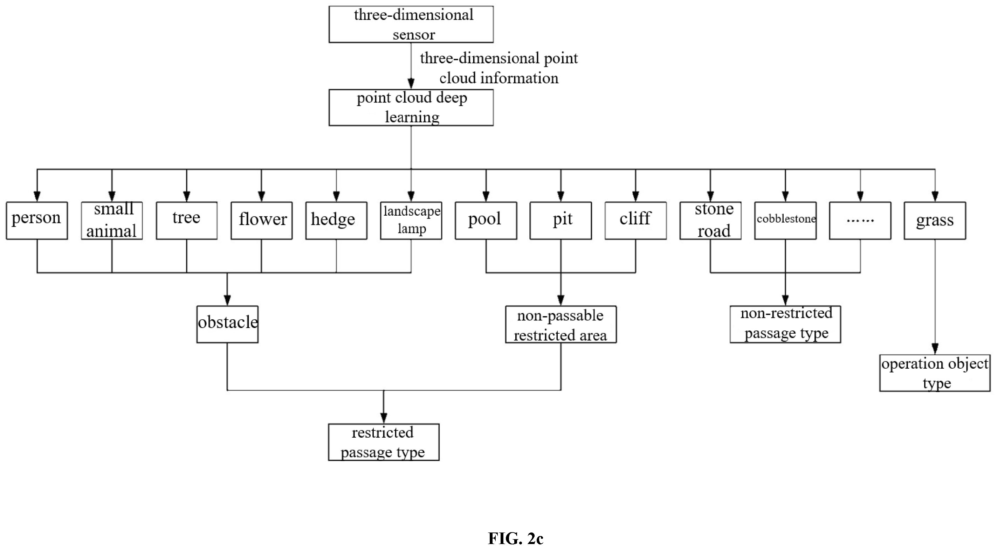

For another example, FIG. 2c is a schematic diagram of a recognition process of a second object type provided by an embodiment of the present specification. As shown in FIG. 2c, three-dimensional point cloud information at a boundary position is collected by a three-dimensional sensor, which is a TOF sensor, the three-dimensional point cloud information is input into a pre-trained point cloud learning model, and an object at the boundary position is recognized by means of a point cloud deep learning method. The object may include a person, a small animal, a tree, a flower, a hedge, a landscape lamp, a pool, a pit, a cliff, a stone road, a cobblestone, ..., grass, etc., wherein the person, the small animal, the tree, the flower, the hedge, the landscape lamp, the pool, the pit, the cliff, the stone road, the cobblestone, ... all belong to a restricted passage type; the person, the small animal, the tree, the flower, the hedge, the landscape lamp, etc. belong to obstacles, the pool, the pit, the cliff belong to a non-passable restricted area, the stone road, the cobblestone, ... belong to an non-restricted passage type, and the grass belongs to an operation object type.

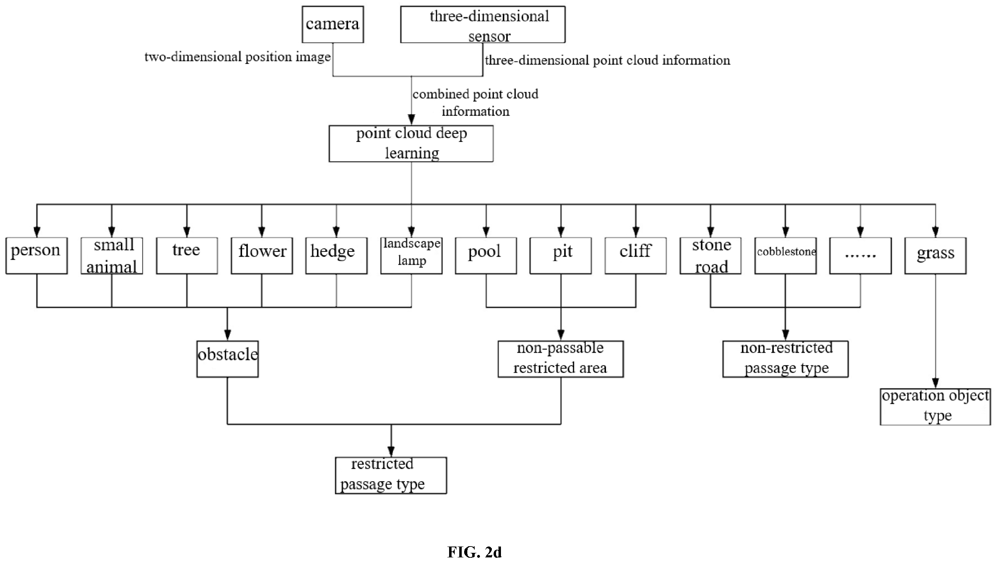

As another example, FIG. 2d is a schematic diagram of a recognition process of a third object type provided by an embodiment of the present specification. As shown in FIG. 2d, a two-dimensional position image at a boundary position is captured by a camera, and three-dimensional point cloud information at the boundary position is collected by a three-dimensional sensor. The three-dimensional point cloud information collected by the three-dimensional sensor is mapped to the two-dimensional position image collected by the camera to obtain combined point cloud information, which is input into a pre-trained point cloud learning model, that is, the camera and the three-dimensional sensor are combined, and an object at the boundary position is recognized by means of a point cloud deep learning method. The object may include a person, a small animal, a tree, a flower, a hedge, a landscape lamp, a pool, a pit, a cliff, a stone road, a cobblestone, ..., grass, etc., wherein the person, the small animal, the tree, the flower, the hedge, the landscape lamp, the pool, the pit, the cliff, the stone road, the cobblestone, ... all belong to a restricted passage type; the person, the small animal, the tree, the flower, the hedge, the landscape lamp, etc. belong to obstacles, the pool, the pit, the cliff belong to a non-passable restricted area, the stone road, the cobblestone, ... belong to an non-restricted passage type, and the grass belongs to an operation object type.

It should be noted that image information at the regional interface is collected by the camera and/or the three-dimensional sensor, and a target object in the image information is recognized by means of a deep learning method, i.e., an object detection method, so that the object type at the regional interface can be obtained. The object type at the regional interface is determined by means of the deep learning method, so that recognition accuracy is high and recognition efficiency is high.

In an optional implementation manner of the present embodiment, determining the position attribute of the regional interface according to the object type includes:
determining that the position attribute of the regional interface is the non-passable and non-operable attribute when the object type is the restricted passage type;
determining that the position attribute of the regional interface is the passable but non-operable attribute when the object type is the non-restricted passage type;
determining that the position attribute of the regional interface is the operable attribute when the object type is the operation object type.

It should be noted that when the object type is the restricted passage type, it indicates that passage is restricted at the regional interface, and the self-moving device cannot travel at the regional interface, otherwise it will collide with an obstacle or enter a non-passable restricted area, resulting in damage to the self-moving device. If passage is restricted, the self-moving device cannot operate, and at this time, it can be determined that the position attribute of the regional interface is the non-passable and non-operable attribute. When the object type is the non-restricted passage type, it indicates that the self-moving device can enter the regional interface but cannot perform an operation task at the regional interface, and at this time, it can be determined that the position attribute of the regional interface is the passable but non-operable attribute. When the object type is the operation object type, it indicates that the regional interface is still an object on which the self-moving device can perform an operation task, and at this time, it can be determined that the position attribute of the regional interface is the operable attribute.

During actual implementation, a corresponding relationship between object types and position attributes can be configured in advance, as shown in Table 1 below.

**Table 1 Corresponding relationship between object types and position attributes**

| object type | position attribute |
|---|---|
| restricted passage type | non-passable and non-operable attribute |
| non-restricted passage type | passable but non-operable attribute |
| operation object type | operable attribute |

In an embodiment of the present specification, the object type at the regional interface can be determined first, and then the corresponding position attribute is determined based on the object type to indicate restriction conditions for passage and operation at the regional interface, so that when it is monitored that the self-moving device travels to a position near the regional interface, the restriction conditions for passage and operation at the regional interface are monitored, thereby facilitating subsequent dynamic adjustment of the corresponding operational route to adapt to the restriction conditions.

Step 106: an operational route of the self-moving device at the regional interface is determined according to the position attribute, and the self-moving device is controlled to operate along the operational route, wherein the operational route is adapted to the restriction conditions.

It should be noted that the position attribute can indicate restriction conditions for passage and operation at the regional interface, and thus an operational route of the self-moving device at the regional interface needs to be determined according to the position attribute, so that the operational route of the self-moving device at the regional interface is adapted to the restriction conditions of the regional interface, sufficient operation is realized, the coverage rate of the operational region is ensured, and safety of the self-moving device is ensured.

In an optional implementation manner of the present embodiment, determining an operational route of the self-moving device at the regional interface according to the position attribute includes:
taking an initial travel route of the regional interface as the operational route at the regional interface when the position attribute is the passable but non-operable attribute;
contracting or expanding the initial travel route of the regional interface to determine the operational route of the self-moving device at the regional interface when the position attribute is other operation attributes.

It should be noted that the initial travel route is a route pre-configured for the self-moving device to travel in each area. When the initial travel route is configured, a regional interface between adjacent regions is usually skipped and no operation task is performed, which may result in omission of the regional interface between adjacent regions, thereby resulting in a low coverage rate of the operational regions.

During actual implementation, with regard to the passable but non-operable attribute, it indicates that the self-moving device can travel at the regional interface but cannot perform an operation task, and there is no need to adjust the initial travel route. The initial travel route of the regional interface can still be taken as the operational route at the regional interface, and the self-moving device can directly pass through the regional interface according to the initial travel route and then continue to operate in an adjacent region without special route change.

In addition, with regard to other operation attributes except the passable but non-operable attribute, it indicates that special passage or operation restrictions exist at the regional interface, and the initial travel route needs to be contracted or expanded to adapt to characteristic conditions at the regional interface, thereby improving the coverage rate of the operational region.

In an optional implementation manner of the present embodiment, contracting or expanding the initial travel route of the regional interface to determine the operational route of the self-moving device at the regional interface when the position attribute is other operation attributes includes:
contracting the initial travel route of the regional interface to determine the operational route of the self-moving device at the regional interface when the position attribute is the non-passable and non-operable attribute;
expanding the initial travel route of the regional interface to determine the operational route of the self-moving device at the regional interface when the position attribute is the operable attribute.

During actual implementation, with regard to the non-passable and non-operable attribute, it indicates that there is an obstacle or a restricted area that the self-moving device cannot enter at the regional interface. If the self-moving device continues to travel according to the initial travel route, it may collide with the obstacle or enter the restricted area, thereby resulting in damage to the self-moving device. Therefore, the initial travel route of the regional interface needs to be contracted to determine the operational route of the self-moving device at the regional interface, so that the operational route can avoid the obstacle or the restricted area that the self-moving device cannot enter, thereby ensuring safety of the self-moving device.

In addition, with regard to the operable attribute, it indicates that the regional interface is an operation object of the self-moving device, that is, the regional interface is passable for the self-moving device and an operation task can be performed at the regional interface. If the self-moving device travels according to the initial travel route, the regional interface will be skipped, resulting in area omission. Therefore, the initial travel route of the regional interface can be expanded at this time to determine the operational route of the self-moving device at the regional interface, so that the self-moving device operates in an additional part of area outward from the regional interface, thereby improving the coverage rate of the operational region.

In an embodiment of the present specification, the initial travel route can be contracted for a certain distance to bypass an obstacle or a restricted passage area when the position attribute is the non-passable and non-operable attribute, thereby ensuring safety of the self-moving device; and the initial travel route can be expanded for a certain distance to operate in an additional part of the area when the position attribute is the operable attribute, thereby improving the coverage rate of the operational region. In this way, the object type at the boundary position of adjacent regions can be recognized, and dynamic edge expansion or edge contraction is determined by means of algorithms, so as to achieve more coverage or full coverage of the operational region.

It should be noted that adaptation parameters such as a contraction distance and an expansion distance for dynamic edge contraction and dynamic edge expansion can be configured in advance. During actual implementation, if contraction or expansion is determined to be required, the pre-configured adaptation parameters can be acquired for dynamic adaptation to obtain an operational route. Furthermore, the adaptation parameters such as the contraction distance and the expansion distance can be manually configured in advance, and can also be automatically calculated and obtained by AI recognition according to the recognized object at the regional interface, so as to dynamically adjust the adaptation parameters such as the contraction distance and the expansion distance.

In an optional implementation manner of the present embodiment, contracting or expanding the initial travel route of the regional interface to determine the operational route of the self-moving device at the regional interface includes:
acquiring a pre-configured adaptation parameter, wherein the adaptation parameter is a contraction distance or an expansion distance;
determining an updated travel route at a distance of the adaptation parameter from the initial travel route in a direction of a first region, and taking the updated travel route as the operational route of the self-moving device at the regional interface; wherein the first region is a current operational region of the self-moving device in the case of contraction, and the first region is an adjacent region of the current operational region of the self-moving device in the case of expansion.

It should be noted that the pre-configured adaptation parameter can be acquired. In the case of contraction, an updated travel route at a distance of the contraction distance from the initial travel route in a direction of the current operational region can be determined, and the updated travel route is taken as the operational route of the self-moving device at the regional interface, so that when the self-moving device travels at the regional interface, the self-moving device contracts for a set distance in a direction close to the current operational region to bypass an obstacle or a restricted passage area. In the case of expansion, an updated travel route can be determined, and the updated travel route is at a distance of the expansion distance from the initial travel route in an adjacent region of the current operational region of the self-moving device, and the updated travel route is taken as the operational route of the self-moving device at the regional interface, so that when the self-moving device travels at the regional interface, the self-moving device expands for a set distance in a direction close to an adjacent region of the current operational region, thereby enabling the self-moving device to operate in an additional part of area outside the regional interface.

In practical applications, after an operational route of the self-moving device at the regional interface is determined according to the position attribute and the self-moving device is controlled to operate along the operational route, the method may return to the step of acquiring device position information collected by the positioning apparatus and a regional interface between at least two operational regions, so as to continuously monitor whether a regional interface exist around the self-moving device, and if a regional interface exist, a position attribute of the regional interface is monitored, so as to dynamically adjust the operational route of the self-moving device until operation is completed.

During specific implementation, an initial travel route of the self-moving device can be pre-configured, and the initial travel route can include various types such as a zigzag route (its shape analogous to the Chinese character " 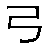 ") or an edge-following route.

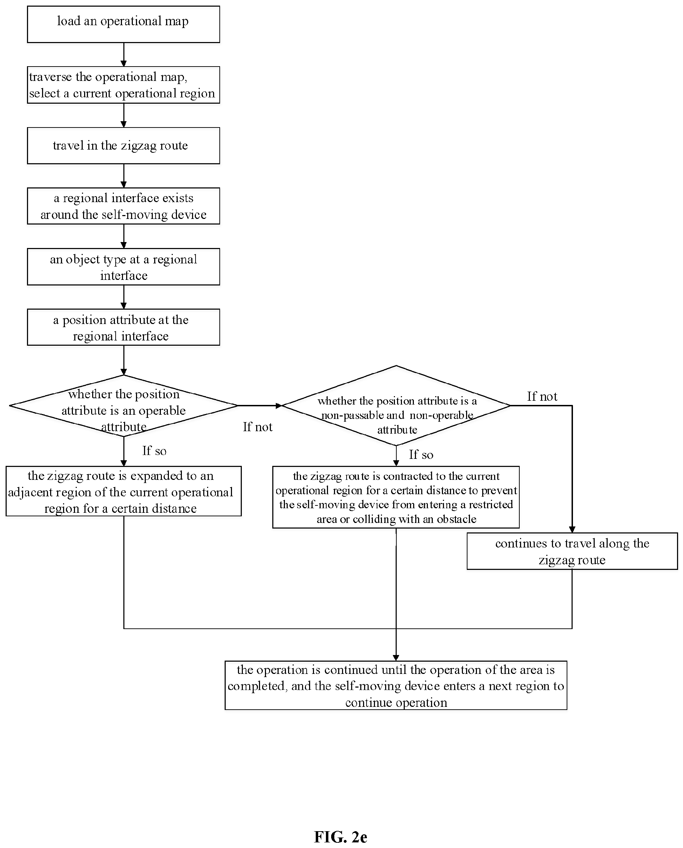

FIG. 2e is a flowchart of a dynamic control method for a zigzag route provided by an embodiment of the present specification. As shown in FIG. 2e, the self-moving device can first load an operational map, traverse each operational region included in the operational map, select an unprocessed area as a current operational region. And the self-moving device starts to travel in the zigzag route, and performs recognition via a positioning sensor, so that an object type at a regional interface is determined by an image acquisition apparatus when it is determined that a regional interface exists around the self-moving device. A position attribute at the regional interface is determined according to the object type, and the position attribute is determined whether it is an operable attribute, and if so, the zigzag route is expanded to an adjacent region of the current operational region for a certain distance. If not, the position attribute is determined whether it is a non-passable and non-operable attribute, and if so, the zigzag route is contracted to the current operational region for a certain distance to prevent the self-moving device from entering a restricted area or colliding with an obstacle; if not, the self-moving device continues to travel along the zigzag route. The operation is continued until the operation of the area is completed, and the self-moving device enters a next area to continue operation.

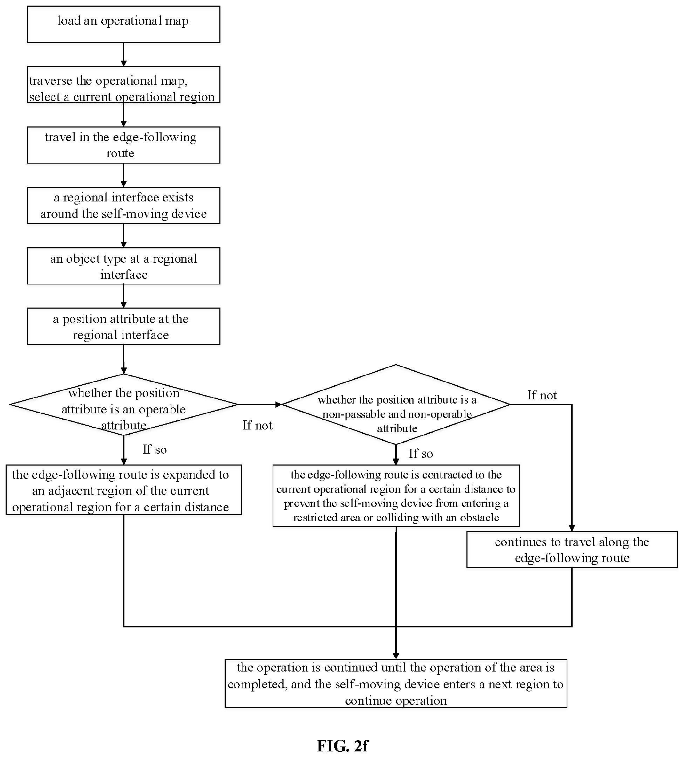

FIG. 2f is a flowchart of a dynamic control method for an edge-following route provided by an embodiment of the present specification. As shown in FIG. 2f, the self-moving device can first load an operational map, traverse each operational region included in the operational map, select an unprocessed area as a current operational region. And the self-moving device starts to travel in the boundary -following route, and performs recognition via a positioning sensor, so that an object type at a regional interface is determined by an image acquisition apparatus when it is determined that a regional interface exists around the self-moving device. A position attribute at the regional interface is determined according to the object type, and the position attribute is determined whether it is an operable attribute, and if so, the edge-following route is expanded to an adjacent region of the current operational region for a certain distance. If not, the position attribute is determined whether it is a non-passable and non-operable attribute, and if so, the edge-following route is contracted to the current operational region for a certain distance to prevent the self-moving device from entering a restricted area or colliding with an obstacle; if not, the self-moving device continues to travel along the edge-following route. The operation is continued until the operation of the area is completed, and the self-moving device enters a next area to continue operation.

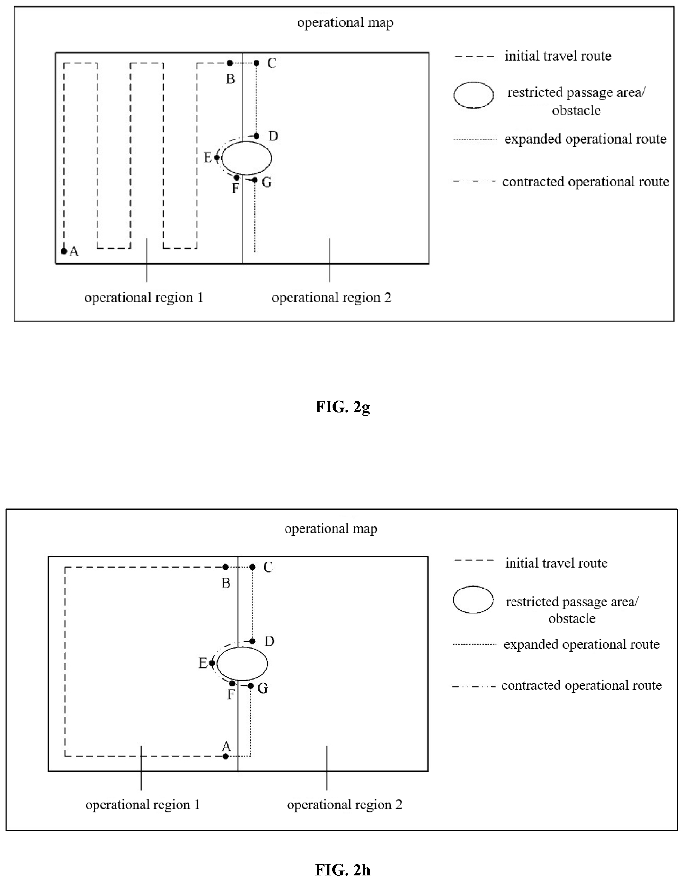

For example, FIG. 2g is a schematic diagram of travel along a zigzag route provided by an embodiment of the present specification. As shown in FIG. 2g, the whole operational map includes two operational zones such as an operational region 1 and an operational region 2, and an elliptical restricted passage area/obstacle exists in the middle of a regional interface between the operational region 1 and the operational region 2. The zigzag route is an initial travel route of the self-moving device, i.e., a normal operation track. The self-moving device starts from a point A of the operational region 1 and travels along the zigzag route. When traveling to a point B, it is monitored that the self-moving device is currently located near the regional interface between the operational region 1 and the operational region 2, that is, there is a regional interface around the self-moving device. At this time, it is recognized and determined that the object type at the regional interface is an operation object of the self-moving device, that is, the position attribute at the regional interface is an operable attribute. At this time, the zigzag route is expanded toward the operational region 2 for a certain distance, wherein the distance can be adaptively adjusted according to a distribution state of the operation object of the self-moving device. Assuming that the zigzag route is expanded to a point C, an expanded operational route is obtained. The self-moving device continues to travel along the expanded operational route. When traveling to a point D, it is still monitored that the self-moving device is located near the regional interface between the operational region 1 and the operational region 2, but it is recognized and determined that the object type at the regional interface is a restricted passage area/an obstacle, that is, the position attribute at the regional interface is a non-passable and non-operable attribute. At this time, the zigzag route is contracted toward the operational region 1 for a certain distance, wherein the distance can be adaptively adjusted according to a distribution state of the non-passable restricted area/obstacle. Assuming that the zigzag route is contracted to a point E to bypass the obstacle, and a contracted operational route is obtained. Then, monitoring is continued. When the self-moving device travels to a point F, it can be detected that the position attribute at the regional interface is restored to the operable attribute, the zigzag route is continuously expanded toward the operational region 2 for a certain distance, assuming that the zigzag route is expanded to a point G, an expanded operational route is obtained, and the self-moving device continues to travel along the expanded operational route to perform an operation task until the operation of the region 1 is completed.

For example, FIG. 2h is a schematic diagram of travel along an edge-following route provided by an embodiment of the present specification. As shown in FIG. 2h, the whole operational map includes two operational zones such as an operational region 1 and an operational region 2, and there is an elliptical restricted passage area/obstacle in the middle of a regional interface between the operational region 1 and the operational region 2. The edge-following route is an initial travel route of the self-moving device, i.e., a normal operation track. The self-moving device starts from a point A of the operational region 1 and travels along the edge-following route. When traveling to a point B, it is monitored that the self-moving device is currently located near the regional interface between the operational region 1 and the operational region 2, that is, there is a regional interface around the self-moving device. At this time, it is recognized and determined that the object type at the regional interface is an operation object of the self-moving device, that is, the position attribute at the regional interface is an operable attribute. At this time, the edge-following route is expanded toward the operational region 2 for a certain distance, wherein the distance can be adaptively adjusted according to a distribution state of the operation object of the self-moving device. Assuming that the edge-following route is expanded to a point C, and an expanded operational route is obtained. The self-moving device continues to travel along the expanded operational route. When traveling to a point D, the self-moving device is still located near the regional interface between the operational region 1 and the operational region 2, but it is recognized and determined that the object type at the regional interface is a restricted passage area/an obstacle, that is, the position attribute at the regional interface is a non-passable and non-operable attribute. At this time, the edge-following route is contracted toward the operational region 1 for a certain distance, wherein the distance can be adaptively adjusted according to a distribution state of the non-passable restricted area/obstacle. Assuming that the edge-following route is contracted to a point E to bypass the obstacle, and a contracted operational route is obtained. Then, monitoring is continued. When the self-moving device travels to a point F, it can be detected that the position attribute at the regional interface is restored to the operable attribute, the edge-following route is continuously expanded toward the operational region 2 for a certain distance, assuming that the edge-following route is expanded to a point G, an expanded operational route is obtained, and the self-moving device continues to travel along the expanded operational route to perform a work until the operation of the region 1 is completed.

One embodiment of the present specification provides a control method for a self-moving device, which can determine a position attribute of a regional interface, wherein the position attribute can indicate restriction conditions for passage and operation at the regional interface. An operational route of the self-moving device at the regional interface can be determined according to the position attribute, and the self-moving device is controlled to operate along the determined operational route, wherein the operational route is adapted to the restriction conditions. In this way, the corresponding operational route can be dynamically adjusted to adapt to the restriction conditions for passage and operation at the regional interface between adjacent regions, so as to avoid an omitted area at the regional interface between adjacent regions, thereby improving the coverage rate of the operational region of the self-moving device and ensuring safety of the self-moving device during travel. In addition, dynamically adjusting the corresponding operational route at the regional interface between adjacent regions can make the self-moving device more intelligent and have better interactivity.

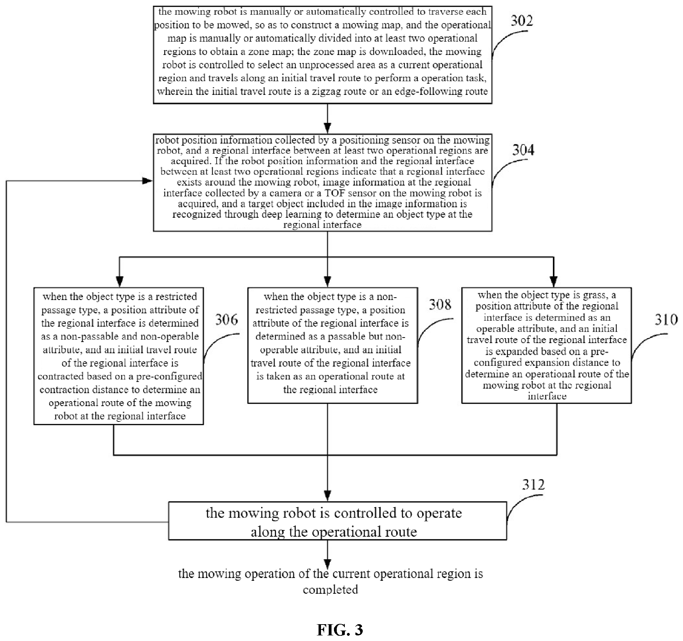

In conjunction with FIG. 3 below, the control method for a self-moving device is further described by taking an application of the control method for a self- moving device provided in the present specification to a mowing robot as an example. Wherein FIG. 3 shows a flowchart of the processing steps for a control method of a self-moving device provided by an embodiment of the present specification, which specifically includes the following steps.

Step 302: the mowing robot is manually or automatically controlled to traverse each position to be mowed, so as to construct a mowing map, and the operational map is manually or automatically divided into at least two operational regions to obtain a zone map; the zone map is downloaded, the mowing robot is controlled to select an unprocessed area as a current operational region and travels along an initial travel route to perform a work, wherein the initial travel route is a zigzag route or an edge-following route.

Step 304: robot position information collected by a positioning sensor on the mowing robot, and a regional interface between at least two operational regions are acquired. If the robot position information and the regional interface between at least two operational regions indicate that a regional interface exists around the mowing robot, image information at the regional interface collected by a camera or a TOF sensor on the mowing robot is acquired, and a target object included in the image information is recognized through deep learning to determine an object type at the regional interface.

Step 306: when the object type is a restricted passage type, a position attribute of the regional interface is determined as a non-passable and non-operable attribute, and an initial travel route of the regional interface is contracted based on a pre-configured contraction distance to determine an operational route of the mowing robot at the regional interface.

Step 308: when the object type is a non-restricted passage type, a position attribute of the regional interface is determined as a passable but non-operable attribute, and an initial travel route of the regional interface is taken as an operational route at the regional interface.

Step 310: when the object type is grass, a position attribute of the regional interface is determined as an operable attribute, and an initial travel route of the regional interface is expanded based on a pre-configured expansion distance to determine an operational route of the mowing robot at the regional interface.

Step 312: the mowing robot is controlled to operate along the operational route.

Step 304 is returned to and executed until the mowing operation of the current operational region is completed.

One embodiment of the present specification provides a control method for a self-moving device, which realizes that when a regional interface exists around a mowing robot, that is, when the mowing robot travels to a position near the regional interface, a position attribute of the regional interface is determined, wherein the position attribute can indicate restriction conditions for passage and operation at the regional interface. An operational route of the mowing robot at the regional interface can be determined according to the position attribute, and the mowing robot is controlled to operate along the determined operational route, wherein the operational route is adapted to the restriction conditions. In this way, the corresponding operational route can be dynamically adjusted to adapt to the restriction conditions for passage and operation at the regional interface between adjacent regions, so as to avoid an omitted area at the regional interface between adjacent regions, thereby improving the coverage rate of the operational region of the mowing robot and ensuring safety of the mowing robot during travel. In addition, dynamically adjusting the corresponding operational route at the regional interface between adjacent regions can make the mowing robot more intelligent and have better interactivity.

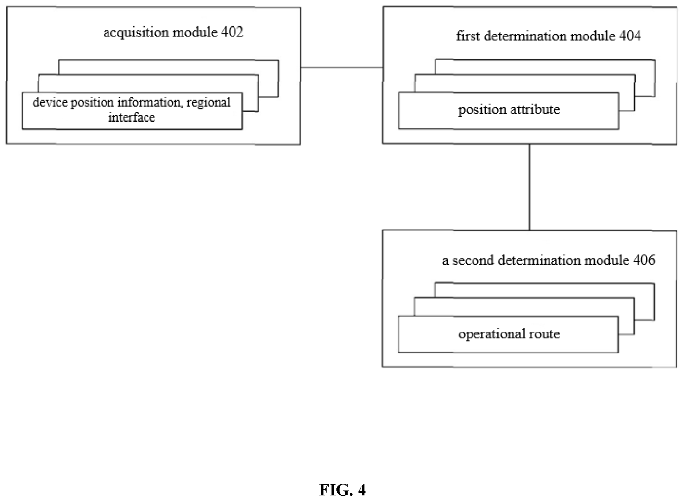

Corresponding to the above-mentioned method embodiment, the present specification further provides an embodiment of a control unit for a self-moving device. FIG. 4 shows a structural schematic diagram of a control unit for a self-moving device provided by an embodiment of the present specification. As shown in FIG. 4, the self-moving device is provided with a positioning apparatus, and the control unit includes:
an acquisition module 402, configured to acquire device position information collected by the positioning apparatus, and a regional interface between at least two operational regions;
a first determination module 404, configured to determine a position attribute of the regional interface, wherein the position attribute is configured to indicate restriction conditions for passage and operation at the regional interface;
a second determination module 406, configured to determine an operational route of the self-moving device at the regional interface according to the position attribute, and control the self-moving device to operate along the operational route, wherein the operational route is adapted to the restriction conditions.

In an optional implementation manner of the present embodiment, the first determination module 404 is further configured to:
determine whether a regional interface exists around the self-moving device according to the device position information and the regional interface between at least two operational regions, and if so, the position attribute of the regional interface around the self-moving device is determined.

In an optional implementation manner of the present embodiment, the first determination module 404 is further configured to:
determine an object type at the regional interface, and determine the position attribute of the regional interface according to the object type;
wherein the object type includes a restricted passage type, a non-restricted passage type and an operation object type; the position attribute includes a non-passable and non-operable attribute, a passable but non-operable attribute and an operable attribute.

In an optional implementation manner of the present embodiment, the self-moving device is further provided with an image acquisition apparatus; the first determination module 404 is further configured to:
acquire image information at the regional interface collected by the image acquisition apparatus;
recognize the image information at the regional interface to determine the object type at the regional interface.

In an optional implementation manner of the present embodiment, the image acquisition apparatus includes a camera and/or a three-dimensional sensor; the first determination module 404 is further configured to:
determine the object type at the regional interface by using a deep learning model according to the image information collected by the camera and/or the three-dimensional sensor.

In an optional implementation manner of the present embodiment, the first determination module 404 is further configured to:
determine that the position attribute of the regional interface is the non-passable and non-operable attribute when the object type is the restricted passage type;
determine that the position attribute of the regional interface is the passable but non-operable attribute when the object type is the non-restricted passage type;
determine that the position attribute of the regional interface is the operable attribute when the object type is the operation object type.

In an optional implementation manner of t the present embodiment, the second determination module 406 is further configured to:
take an initial travel route of the regional interface as the operational route at the regional interface when the position attribute is the passable but non-operable attribute;
contract or expand the initial travel route of the regional interface to determine the operational route of the self-moving device at the regional interface when the position attribute is other operation attributes.

In an optional implementation manner of the present embodiment, the second determination module 406 is further configured to:
contract the initial travel route of the regional interface to determine the operational route of the self-moving device at the regional interface when the position attribute is the non-passable and non-operable attribute;
expand the initial travel route of the regional interface to determine the operational route of the self-moving device at the regional interface when the position attribute is the operable attribute.

In an optional implementation manner of the present embodiment, the second determination module 406 is further configured to:
acquire a pre-configured adaptation parameter, wherein the adaptation parameter is a contraction distance or an expansion distance;
determine an updated travel route at a distance of the adaptation parameter from the initial travel route in a direction of a first region, and take the updated travel route as the operational route of the self-moving device at the regional interface; wherein the first region is a current operational region of the self-moving device in the case of contraction, and the first region is an adjacent region of the current operational region of the self-moving device in the case of expansion.

In an optional implementation manner of the present embodiment, the first determination module 404 is further configured to:
if the image acquisition apparatus is a camera, input a two-dimensional position image collected by the camera into an image recognition model to obtain a target object at the regional interface;
if the image acquisition apparatus is a three-dimensional sensor, input three-dimensional point cloud information collected by the three-dimensional sensor into a point cloud learning model to obtain a target object at the regional interface;
if the image acquisition apparatus is a camera and a three-dimensional sensor, map the three-dimensional point cloud information collected by the three-dimensional sensor to the two-dimensional position image collected by the camera to obtain combined point cloud information, and input the combined point cloud information into the point cloud learning model to obtain a target object at the regional interface;
query a target type of the target object, and take the target type as the object type at the regional interface.

In an optional implementation manner of the present embodiment, the control unit further includes a marking module, which is configured to:
construct an operational map;
divide the operational map into at least two operational regions, and mark regional boundaries of adjacent regions.

In an optional implementation manner of the present embodiment, the marking module is further configured to:
mark a position attribute at the regional interface of the adjacent regions.

One embodiment of the present specification provides a control unit for a self-moving device, which can determine a position attribute of a regional interface, wherein the position attribute can indicate restriction conditions for passage and operation at the regional interface. An operational route of the self-moving device at the regional interface can be determined according to the position attribute, and the self-moving device is controlled to operate along the determined operational route, wherein the operational route is adapted to the restriction conditions. In this way, the corresponding operational route can be dynamically adjusted to adapt to the restriction conditions for passage and operation at the regional interface between adjacent regions, so as to avoid an omitted area at the regional interface between adjacent regions, thereby improving the coverage rate of the operational region of the self-moving device and ensuring safety of the self-moving device during travel. In addition, dynamically adjusting the corresponding operational route at the regional interface between adjacent regions can make the self-moving device more intelligent and have better interactivity.

The above describes a schematic solution of a control unit for a self-moving device of the present embodiment. It should be noted that the technical solution of the control unit for a self-moving device belongs to the same concept as the above-mentioned technical solution of the control method for a self-moving device, and as for details not described in detail in the technical solution of the control unit for a self-moving device, reference may be made to the above-mentioned description of the technical solution of the control method for a self-moving device.

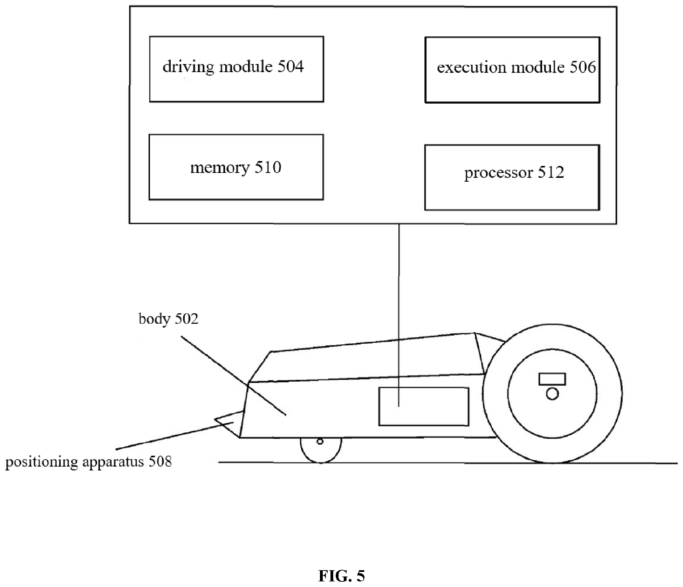

FIG. 5 shows a structural block diagram of a self-moving device provided by an embodiment of the present application. Components of the self-moving device include but are not limited to a body 502; a driving module 504, disposed on the body 502 and configured to drive the body 502 to travel; an execution module 506, disposed on the body 502 and configured to execute an operation task; a positioning apparatus 508, disposed on the body 502; a memory 510, configured to store a computer program; a processor 512, coupled to the memory 510, wherein the program includes instructions, and when executed by the processor 512, the instructions cause the processor 512 to perform operations, which include operations of the above control method for a self-moving device.

It should be noted that when the self-moving device is a mower, the execution module may be a cutting module in the mower, and the cutting module is disposed on a mower body and configured to perform a cutting task; when the self-moving device is a sweeping robot, the execution module may be a sweeping module in the sweeping robot, and the sweeping module is disposed on a sweeping robot body and configured to perform a sweeping task; when the self-moving device is a food delivery machine, the execution module may be a moving module in the food delivery machine, and the moving module is disposed on a food delivery machine body and configured to perform a food delivery task.

The self-moving device provided by an embodiment of the present application can determine a position attribute of a regional interface, wherein the position attribute can indicate restriction conditions for passage and operation at the regional interface. An operational route of the self-moving device at the regional interface can be determined according to the position attribute, and the self-moving device is controlled to operate along the determined operational route, wherein the operational route is adapted to the restriction conditions. In this way, the corresponding operational route can be dynamically adjusted to adapt to the restriction conditions for passage and operation at the regional interface between adjacent regions, so as to avoid an omitted area at the regional interface between adjacent regions, thereby improving the coverage rate of the operational region of the self-moving device and ensuring safety of the self-moving device during travel. In addition, the corresponding operational route at the regional interface between adjacent regions is dynamically adjusted, which can make the self-moving device more intelligent and have better interactivity.

The above describes a schematic solution of a self-moving device of the present embodiment. It should be noted that the technical solution of a self-moving device belongs to the same concept as the above-mentioned technical solution of the control method for a self-moving device, and as for details not described in detail in the technical solution of a self-moving device, reference may be made to the above-mentioned description of the technical solution of the control method for a self-moving device.

An embodiment of the present specification further provides a computer-readable storage medium, which stores computer-executable instructions that implement steps of the above control method for a self-moving device when executed by a processor.

The above describes a schematic solution of a computer-readable storage medium of the present embodiment. It should be noted that the technical solution of a storage medium belongs to the same concept as the above-mentioned technical solution of the control method for a self-moving device, and as for details not described in detail in the technical solution of a storage medium, reference may be made to the above-mentioned description of the technical solution of the control method for a self-moving device.

An embodiment of the present specification further provides a computer program, wherein when the computer program is executed in a computer, the computer is caused to execute above steps of the control method for a self-moving device.

The above describes a schematic solution of a computer program of the present embodiment. It should be noted that the technical solution of a computer program belongs to the same concept as the above-mentioned technical solution of the control method for a self-moving device, and as for details not described in detail in the technical solution of a computer program, reference may be made to the above-mentioned description of the technical solution of the control method for a self-moving device.

The above describes specific embodiments of the present specification. Other embodiments are within the scope of the appended claims. In some cases, actions or steps described in the claims can be executed in a sequence different from that in the embodiments and still achieve desired results. Furthermore, the processes depicted in the accompanying drawings do not necessarily require the specific sequence or continuous sequence shown to achieve desired results. In some embodiments, multitasking and parallel processing are also possible or may be advantageous.

The computer-executable instructions include computer program code, and the computer program code may be in a form of source code, object code, an executable file or some intermediate forms. The computer-readable medium may include any entity or apparatus capable of carrying the computer program code, a recording medium, a USB flash drive, a removable hard disk, a magnetic disk, an optical disk, a computer memory, a Read-Only Memory (ROM), a Random Access Memory (RAM), an electrical carrier signal, a telecommunication signal, a software distribution medium, etc. It should be noted that content included in the computer-readable medium can be appropriately increased or decreased according to requirements of patent practice. For example, in some regions, according to patent practice, computer-readable medium does not include the electrical carrier signal and the telecommunication signal.

It should be noted that as to the foregoing various method embodiments, for the sake of simplicity in description, they are all expressed as a series of action combinations, but those skilled in the art should understand that the embodiments of the present specification are not limited by the described action sequence, because certain steps can be performed in other sequences or simultaneously according to the embodiments of the present specification. In addition, those skilled in the art should also understand that embodiments described in the specification are all preferred embodiments, and actions and modules involved are not necessarily required by the embodiments of the present specification.

In the above embodiments, description of each embodiment has its own emphasis. As for a part that is not described in detail in a certain embodiment, reference may be made to relevant description of other embodiments.

The preferred embodiments of the present specification disclosed above are merely used to assist in the explanation of the present specification. Optional embodiments do not describe all details in full, nor do they limit the invention to the specific embodiments described. Obviously, many modifications and changes can be made according to content of embodiments of the present specification. The embodiments are selected and specifically described in the present specification, so as to better explain principles and practical applications of the embodiments of the present specification, so that those skilled in the art can well understand and utilize the present specification. The present specification is limited only by the claims and the full scope and equivalents thereof.

## Claims

1. A control method for a self-moving device provided with a positioning apparatus, **characterized by** comprising:
acquiring device position information collected by the positioning apparatus, and a regional interface between at least two operational regions;
determining a position attribute of the regional interface, wherein the position attribute is configured to indicate restriction conditions for passage and operation at the regional interface;
determining an operational route of the self-moving device at the regional interface according to the position attribute; and
controlling the self-moving device to operate along the operational route, wherein the operational route is adapted to the restriction conditions.

2. The control method for a self-moving device according to claim 1, **characterized in that** the determining a position attribute of the regional interface comprises:
determining whether a regional interface exists around the self-moving device according to the device position information and the regional interface between at least two operational regions;
if so, determining the position attribute of the regional interface around the self-moving device.

3. The control method for a self-moving device according to claim 1, **characterized in that** the determining a position attribute of the regional interface comprises:
determining an object type at the regional interface; and
determining the position attribute of the regional interface according to the object type;
wherein the object type comprises a restricted passage type, a non-restricted passage type and an operation object type;
the position attribute comprises a non-passable and non-operable attribute, a passable but non-operable attribute, and an operable attribute.

4. The control method for a self-moving device according to claim 3, **characterized in that** the self-moving device is further provided with an image acquisition apparatus; the determining an object type at the regional interface comprises:
acquiring image information at the regional interface collected by the image acquisition apparatus; and
recognizing the image information at the regional interface to determine the object type at the regional interface.

5. The control method for a self-moving device according to claim 4, **characterized in that** the image acquisition apparatus comprises a camera and/or a three-dimensional sensor; the recognizing the image information at the regional interface to determine the object type at the regional interface comprises:
determining the object type at the regional interface by using a deep learning model according to the image information collected by the camera and/or the three-dimensional sensor.

6. The control method for a self-moving device according to any one of claims 3 to 5, **characterized in that** the determining the position attribute of the regional interface according to the object type comprises:
determining that the position attribute of the regional interface is the non-passable and non-operable attribute when the object type is the restricted passage type;
determining that the position attribute of the regional interface is the passable but non-operable attribute when the object type is the non-restricted passage type; and
determining that the position attribute of the regional interface is the operable attribute when the object type is the operation object type.

7. The control method for a self-moving device according to any one of claims 1 to 5, **characterized in that** the determining the operational route of the self-moving device at the regional interface according to the position attribute comprises:
taking an initial travel route of the regional interface as the operational route at the regional interface when the position attribute is the passable but non-operable attribute; and
contracting or expanding the initial travel route of the regional interface to determine the operational route of the self-moving device at the regional interface when the position attribute is other operation attributes.

8. The control method for a self-moving device according to claim 7, **characterized in that** the contracting or expanding the initial travel route of the regional interface to determine the operational route of the self-moving device at the regional interface when the position attribute is other operation attributes comprises:
contracting the initial travel route of the regional interface to determine the operational route of the self-moving device at the regional interface when the position attribute is the non-passable and non-operable attribute; and
expanding the initial travel route of the regional interface to determine the operational route of the self-moving device at the regional interface when the position attribute is the operable attribute.

9. The control method for a self-moving device according to claim 7, **characterized in that** the contracting or expanding the initial travel route of the regional interface to determine the operational route of the self-moving device at the regional interface comprises:
acquiring a pre-configured adaptation parameter, wherein the adaptation parameter is a contraction distance or an expansion distance; and
determining an updated travel route at a distance of the adaptation parameter from the initial travel route in a direction of a first region, and taking the updated travel route as the operational route of the self-moving device at the regional interface;
wherein the first region is a current operational region of the self-moving device in the case of contraction, and the first region is an adjacent region of the current operational region of the self-moving device in a case of expansion.

10. The control method for a self-moving device according to claim 5, **characterized in that** the determining the object type at the regional interface by using a deep learning model according to the image information collected by the camera and/or the three-dimensional sensor comprises:
inputting a two-dimensional position image collected by the camera into an image recognition model to obtain a target object at the regional interface when the image acquisition apparatus is the camera;
inputting three-dimensional point cloud information collected by the three-dimensional sensor into a point cloud learning model to obtain a target object at the regional interface when the image acquisition apparatus is the three-dimensional sensor;
mapping the three-dimensional point cloud information collected by the three-dimensional sensor to the two-dimensional position image collected by the camera to obtain combined point cloud information;
inputting the combined point cloud information into the point cloud learning model to obtain a target object at the regional interface when the image acquisition apparatus is the camera and the three-dimensional sensor; and
querying a target type of the target object, and taking the target type as the object type at the regional interface.

11. The control method for a self-moving device according to any one of claims 1 to 5, **characterized in that** before acquiring the device position information collected by the positioning apparatus, the method further comprises:
constructing an operational map; and
dividing the operational map into at least two operational regions, and marking regional boundaries between adjacent regions.

12. The control method for a self-moving device according to claim 11, **characterized in that** after marking the regional boundaries between adjacent regions, the method further comprises:
marking position attributes at the regional boundaries between the adjacent regions.

13. A control unit for a self-moving device, **characterized in that** the self-moving device is provided with a positioning apparatus, the control unit comprises:
an acquisition module (402), configured to acquire device position information collected by the positioning apparatus, and a regional interface between at least two operational regions;
a first determination module (404), configured to determine a position attribute of the regional interface, wherein the position attribute is configured to indicate restriction conditions for passage and operation at the regional interface; and
a second determination module (406), configured to determine an operational route of the self-moving device at the regional interface according to the position attribute, and control the self-moving device to operate along the operational route, wherein the operational route is adapted to the restriction conditions.

14. A control method for a self-moving device, **characterized in that** the self-moving device is provided with a positioning apparatus, the method comprises:
acquiring device position information collected by the positioning apparatus, and a regional interface between at least two operational regions during travel of the self-moving device; and
contracting an initial travel route of the regional interface to obtain the operational route of the self-moving device at the regional interface when the regional interface has the non-passable and non-operable attribute, and controlling the self-moving device to operate along the operational route.

15. The control method for a self-moving device according to claim 14, **characterized in that** the contracting an initial travel route of the regional interface to obtain the operational route of the self-moving device at the regional interface comprises:
contracting the initial travel route of the regional interface according to the device position information to obtain the operational route of the self-moving device at the regional interface.

16. The control method for a self-moving device according to claim 14, **characterized in that** the self-moving device is further provided with an image acquisition apparatus; after acquiring the device position information collected by the positioning apparatus, and the regional interface between at least two operational regions, the method further comprises:
acquiring image information at the regional interface collected by the image acquisition apparatus;
recognizing the image information at the regional interface to determine the object type at the regional interface; and
determining that the regional interface has the non-passable and non-operable attribute when the object type is the restricted passage type.

17. The control method for a self-moving device according to claim 16, **characterized in that** the image acquisition apparatus comprises a camera and/or a three-dimensional sensor; the recognizing the image information at the regional interface to determine the object type at the regional interface comprises:
determining the object type at the regional interface by using a deep learning model according to the image information collected by the camera and/or the three-dimensional sensor.

18. The control method for a self-moving device according to claim 14, **characterized in that** the contracting an initial travel route of the regional interface to obtain the operational route of the self-moving device at the regional interface comprises:
acquiring a pre-configured adaptation parameter, wherein the adaptation parameter is a contraction distance; and
determining an updated travel route at a distance of the adaptation parameter from the initial travel route in a direction of a first region, and taking the updated travel route as the operational route of the self-moving device at the regional interface;
wherein the first region is a current operational region of the self-moving device.

19. The control method for a self-moving device according to any one of claims 14 to 18, **characterized in that** before acquiring the device position information collected by the positioning apparatus, the method further comprises:
constructing an operational map;
dividing the operational map into at least two operational regions, and marking region boundaries between adjacent regions; and
marking position attributes at the region boundaries between the adjacent regions, wherein the position attribute is configured to indicate restriction conditions for passage and operation at the regional interface.

20. A control method for a self-moving device, **characterized in that** the self-moving device is provided with a positioning apparatus, the method comprises:
acquiring device position information collected by the positioning apparatus, and a regional interface between at least two operational regions during travel of the self-moving device;
expanding an initial travel route of the regional interface to obtain the operational route of the self-moving device at the regional interface when the regional interface has the operable attribute; and
controlling the self-moving device to operate along the operational route.

21. The control method for a self-moving device according to claim 20, **characterized in that** the expanding an initial travel route of the regional interface to obtain the operational route of the self-moving device at the regional interface comprises:
expanding the initial travel route of the regional interface according to the device position information to obtain the operational route of the self-moving device at the regional interface.

22. The control method for a self-moving device according to claim 20, **characterized in that** the self-moving device is further provided with an image acquisition apparatus; after acquiring the device position information collected by the positioning apparatus, and the regional interface between at least two operational regions, the method further comprises:
acquiring image information at the regional interface collected by the image acquisition apparatus;
recognizing the image information at the regional interface to determine the object type at the regional interface; and
determining that the regional interface has the operable attribute when the object type is the operation object type.

23. The control method for a self-moving device according to claim 20, **characterized in that** the expanding an initial travel route of the regional interface to obtain the operational route of the self-moving device at the regional interface comprises:
acquiring a pre-configured adaptation parameter, wherein the adaptation parameter is an expansion distance;
determining an updated travel route at a distance of the adaptation parameter from the initial travel route in a direction of a first region; and
taking the updated travel route as the operational route of the self-moving device at the regional interface;
wherein the first region is an adjacent region of the current operational region of the self-moving device.

24. The control method for a self-moving device according to any one of claims 20 to 23, **characterized in that** before acquiring the device position information collected by the positioning apparatus, the method further comprises:
constructing an operational map;
dividing the operational map into at least two operational regions, and marking region boundaries between adjacent regions; and
marking position attributes at the region boundaries between the adjacent regions, wherein the position attribute is configured to indicate restriction conditions for passage and operation at the regional interface.

25. A control method for a self-moving device, **characterized in that** the self-moving device is provided with a positioning apparatus, the method comprises:
acquiring device position information collected by the positioning apparatus, and a regional interface between at least two operational regions during travel of the self-moving device;
taking an initial travel route of the regional interface as the operational route at the regional interface when the regional interface has the passable but non-operable attribute; and
controlling the self-moving device to operate along the operational route.

26. A self-moving device, **characterized by** comprising:
a body (502);
a driving module (504) disposed on the body (502) and configured to drive the body (502) to travel;
an execution module (506) disposed on the body (502) and configured to execute a work;
a positioning apparatus (508) disposed on the body (502);
a memory (510) configured to store a computer program;
a processor (512) coupled to the memory (510), wherein the program comprises instructions, which cause the processor (512) to perform operations when executed by the processor (512), and the operations comprise the steps of the control method for a self-moving device according to any one of claims 1 to 12, any one of claims 14 to 19, any one of claims 20 to 24, or claim 25.

27. A computer-readable storage medium, **characterized in that** the computer-readable storage medium stores computer-executable instructions that implement the steps of the control method for a self-moving device according to any one of claims 1 to 12, any one of claims 14 to 19, any one of claims 20 to 24, or claim 25, when executed by a processor.
